(19) Europäisches Patentamt
European Patent Office
Office européen des brevets

(11) **EP 2 682 327 A2**

(12) **EUROPEAN PATENT APPLICATION**

(43) Date of publication:
**08.01.2014 Bulletin 2014/02**

(51) Int Cl.:
***B62D 5/04*** *(2006.01)*

(21) Application number: **13174095.3**

(22) Date of filing: **27.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.07.2012 JP 2012148702**

(71) Applicant: **JTEKT CORPORATION
Osaka-shi
Osaka 542-8502 (JP)**

(72) Inventors:
• **Kunishima, Takeshi**
  **Osaka-shi,, Osaka 542-8502 (JP)**
• **Yamauchi, Mai**
  **Osaka-shi,, Osaka 542-8502 (JP)**

(74) Representative: **Winter, Brandl, Fürniss, Hübner, Röss, Kaiser, Polte - Partnerschaft
Patent- und Rechtsanwaltskanzlei
Bavariaring 10
80336 München (DE)**

(54) **Electric power steering system**

(57) The surface roughness (Ra) of tooth surfaces (25) of teeth (21) of a worm wheel (20) is greater than or equal to 0.1 µm and less than or equal to 0.5 µm and, more particularly, less than or equal to 0.3 µm. The worm wheel (20) is produced by forming a resin member (22) on which the teeth (21) are to be formed, using a resin composition that contains reinforcing fiber; forming the teeth (21) by performing a gear-cutting process; and adjusting the surface roughness (Ra) of the tooth surfaces (25) by performing a running-in machining process on the teeth (21).

Fig. 6

EP 2 682 327 A2

**Description**

BACKGROUND OF THE INVENTION

1. Field of the Invention

The invention relates to an electric power steering system.

2. Discussion of Background

Generally, in an electric power steering system, rotation of a rotary shaft of a steering-assist electric motor is transmitted to a steered mechanism, such as a rack-and-pinion mechanism, via a speed reducer so as to assist the operation of the steered mechanism caused by steering operation performed by a driver. The speed reducer usually employed is one that includes a worm gear as a small gear and a worm wheel as a large gear, which mesh with each other.

In recent years, there have been more and more cases where a worm gear made of a metal, such as iron, is combined with a worm wheel in which at least teeth that mesh with teeth of the worm gear are formed of a resin, in order to reduce the gear rattle produced at a meshing portion between the two gears or to reduce the size of the speed reducer so as to reduce the weight of the electric power steering system (see, for example, Japanese Patent Application Publication No. 2005-214339 (JP 2005-214339 A)).

In general, such a worm wheel is produced by forming an annular resin member on an outer periphery of a core metal by injection molding (insert molding) and then forming teeth on the outer periphery of the resin member by a gear-cutting process such as a gear-hobbing process.

There are an increasing number of cases where the resin member is formed of a resin composition that contains reinforcing fiber in order to cope with the increase of the output of an electric motor and the increase of the pressure applied to the tooth surfaces due to providing an electric power steering system in a large-size vehicle. Grease is applied between the two gears. The applied grease intervenes between the tooth surfaces of the two gears, and forms an oil film, which functions to assist the sliding of the tooth surfaces of the small and large gears as the small gear rotates due to rotation of the rotary shaft of the electric motor and accordingly the large gear is rotated. Therefore, by applying the grease, the steering torque of the electric power steering system is reduced, and driver's steering feeling is improved.

However, the tooth surfaces of the teeth of the large gear formed by performing the gear-cutting process on the resin member made of the resin composition containing the reinforcing fiber have greater surface roughness than the surface roughness of the tooth surfaces made of a resin that does not contain the reinforcing fiber. This is mainly because the reinforcing fiber is exposed on the tooth surfaces due to the gear-cutting process. When the surface roughness of the tooth surfaces is thus increased, the oil film-forming performance of the grease on the tooth surfaces of the teeth of the large gear may deteriorate, and a continuous oil film for assisting the sliding between the tooth surfaces as mentioned above may not be formed between the tooth surfaces of the teeth of the large gear and the tooth surfaces of the teeth of the small gear.

When an oil film is not formed between the tooth surfaces of the two gears, the tooth surfaces of the two gears are in the state of boundary lubrication, that is, protruding portions of the tooth surfaces of the two gears directly contact each other. In the case where the tooth surfaces of the two gears are in the state of boundary lubrication, the coefficient of sliding friction between the tooth surfaces of the two gears increases, the steering torque increases, and the steering feeling deteriorates, in comparison with the case where lubrication is achieved by only a continuous oil film (i.e., the tooth surfaces are in the state of fluid lubrication) or the tooth surfaces are in the state of mixed lubrication in which the fluid lubrication and the boundary lubrication are mixed.

SUMMARY OF THE INVENTION

The invention provides an electric power steering system in which steering torque is low and which provides good steering feeling, by improving the oil film-forming performance of grease on tooth surfaces of teeth of a large gear such as a worm wheel, which is formed using a resin composition that contains reinforcing fiber, so that a continuous oil film is formed between the tooth surfaces of the teeth of the large gear and tooth surfaces of teeth of a small gear such as a worm gear and the coefficient of sliding friction between the tooth surfaces of the two gears is appropriately reduced due to lubrication by the oil film.

According to a feature of an example of the invention, there is provided an electric power steering system including a speed reducer that includes a small gear and a large gear that mesh with each other, wherein, in the large gear, at least a plurality of teeth that mesh with teeth of the small gear are formed of a resin composition that contains reinforcing fiber, and wherein a surface roughness Ra of tooth surfaces of the teeth of the large gear is greater than or equal to 0.1 $\mu$m and less than or equal to 0.5 $\mu$m.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 is a schematic diagram showing a general configuration of an example of an embodiment of an electric power steering system according to the invention;

FIG. 2 is is a plan view of a worm wheel provided in the electric power steering system;

FIG. 3 is a perspective view showing an enlarged portion of the worm wheel, the enlarged portion including teeth;

FIG. 4 is a plan view showing an intermediate state of a worm wheel during production thereof;

FIG. 5 is a perspective view illustrating an outline of a test method that was performed to determine a friction coefficient between tooth surfaces of two gear components by using a model of the tooth surfaces of the teeth of the worm gear and the worm wheel;

FIG. 6 is a graph showing a relation between the surface roughness Ra of the model of the tooth surfaces of the teeth of the worm wheel, and the friction coefficient between the tooth surfaces of the two gear components, which was determined by the test method illustrated in FIG. 5; and

FIG. 7 is a graph showing a relation between the film thickness ratio of an oil film formed between the tooth surfaces of the two gear components and the friction coefficient between the tooth surfaces of the two gear components, which was determined by the test method shown in FIG. 5.

DETAILED DESCRIPTION OF EMBODIMENTS

Hereinafter, embodiments of the invention will be described with reference to the accompanying drawings.

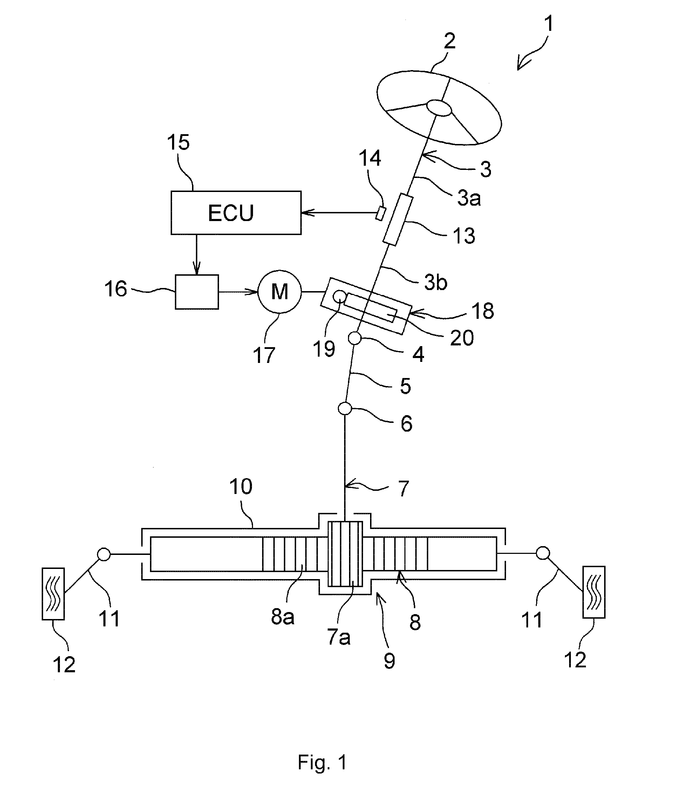

FIG. 1 is a schematic diagram showing a general configuration of an example of an embodiment of an electric power steering system according to the invention. An electric power steering system 1 includes: a steering shaft 3 connected to a steering member 2, such as a steering wheel or the like, so as to be rotatable together with the steering member 2; an intermediate shaft 5 connected to the steering shaft 3 via a universal joint 4; a pinion shaft 7 connected to the intermediate shaft 5 via a universal joint 6; and a rack bar 8 as a steered shaft that extends in the right-left direction of a vehicle and that has rack teeth 8a that mesh with pinion teeth 7a provided on the pinion shaft 7.

The pinion shaft 7 and the rack bar 8 constitute a steered mechanism that includes a rack-and-pinion mechanism. The rack bar 8 is supported in a rack housing 10 fixed to a vehicle body so that the rack bar 8 is able to linearly reciprocate. Two opposite end portions of the rack bar 8 protrude toward two opposite sides of the rack housing 10, and are coupled to tie rods 11, respectively.

Each tie rod 11 is connected to a corresponding one of steered wheels 12 via a knuckle arm (not shown). When the steering shaft 3 is rotated as the steering member 2 is operated, the rotation is converted into linear motion of the rack bar 8 in the right-left direction of the vehicle by the pinion teeth 7a and the rack teeth 8a, and thus, the steered wheels 12 are steered.

The steering shaft 3 is divided into an input shaft 3a connected to the steering member 2 and an output shaft 3b connected to the pinion shaft 7. The two shafts 3a and 3b are connected to each other via a torsion bar 13 so as to be rotatable relative to each other on a common axis. Furthermore, the torsion bar 13 is provided with a torque sensor 14 for detecting the steering torque from the amount of relative rotational displacement between the input and output shafts 3a and 3b. Results of torque detection by the torque sensor 14 are provided to an ECU 15.

The ECU 15 drives and controls a steering-assist electric motor 17 via a drive circuit 16 on the basis of results of torque detection and results of vehicle speed detection provided by a vehicle speed sensor (not shown). The output rotation of the electric motor 17 is reduced in speed by a speed reducer 18, and then is transferred to the pinion shaft 7, and is converted into linear motion of the rack bar 8. Thus, steering is assisted. The speed reducer 18 includes a worm gear 19 as an input shaft that is rotated by the electric motor 17 and a worm wheel 20 that meshes with the worm gear 19 and that is connected to the output shaft 3b of the steering shaft 3 so as to be rotatable together with the output shaft 3b. The worm gear 19 of the speed reducer 18 is formed of a metal such as iron.

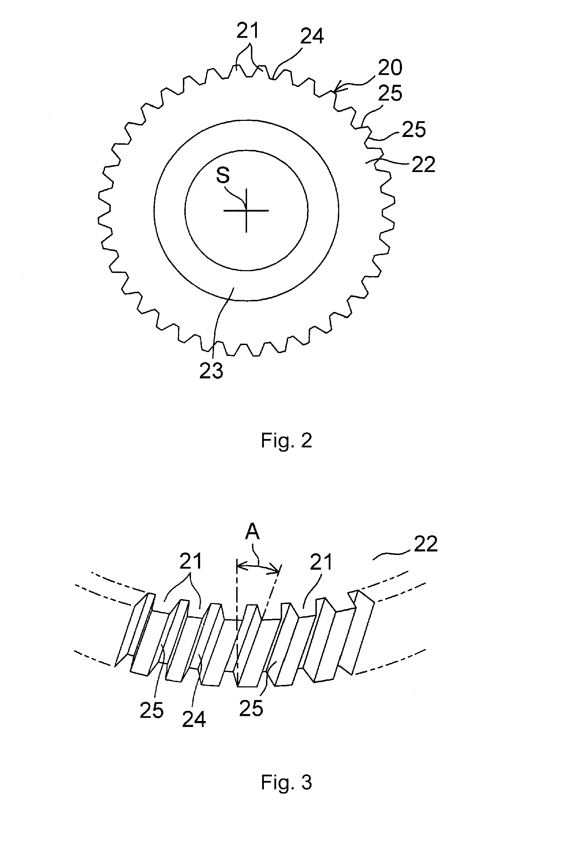

FIG. 2 is a plan view showing an example of an embodiment of the worm wheel 20 as a large gear provided in the electric power steering system 1. FIG. 3 is a perspective view showing an enlarged portion of the worm wheel 20, the enlarged portion including teeth 21.

With reference to FIGS. 1 and 2, the worm wheel 20 includes: an annular resin member 22 that is made of a resin composition containing resin and reinforcing fiber and that has on its outer periphery a plurality of teeth 21 that mesh with the teeth of the worm gear 19; and an annular core metal 23 that is fitted firmly to a center portion of the resin member 22.

Examples of the aforementioned resin include engineering plastics such as polyamide. Examples of the aforementioned reinforcing fiber include glass fiber and carbon fiber. The size of the reinforcing fiber needs to be within a usual range of sizes generally employed for the purpose of reinforcing the resin.

With reference to FIGS. 2 and 3, the teeth 21 are provided on the outer periphery of the resin member 22 with a predetermined lead angle A with respect to the axial direction of a center axis S of the worm wheel 20. A tooth space 24 is formed between each pair of adjacent teeth 21 of the worm wheel 20. Surfaces of each tooth 21 that face adjacent tooth spaces 24 serve as tooth surfaces 25 that directly contact the tooth surfaces of teeth (not shown) of the worm gear 19 so as to convert rotation of the worm gear 19 to driven rotation of the worm wheel 20 when the teeth 21 mesh with the teeth (not shown) of the worm gear 19.

Since the worm gear 19 and the worm wheel 20 are rotated both clockwise and counterclockwise in accordance with clockwise and counterclockwise rotations of the steering member 2, the two opposite tooth surfaces of each tooth 21, which face the tooth spaces 24 on respective sides of the tooth 21, serve as tooth surfaces 25. In this invention, the surface roughness Ra of the tooth surfaces 25 is made greater than or equal to 0.1 $\mu$m and less than or equal to 0.5 $\mu$m. The surface roughness Ra is made greater than or equal to 0.1 $\mu$m because it is not easy to perform a process that makes the surface roughness smaller than this value.

On the other hand, if the surface roughness Ra exceeds 0.5 $\mu$m, a continuous oil film cannot be formed between the tooth surfaces 25 of the worm wheel 20 and tooth surfaces of the worm gear 19. That is, if the surface roughness Ra of the tooth surfaces 25 exceeds 0.5 $\mu$m, the film thickness ratio determined by the following expression (1) becomes less than 0.2. Thus, the tooth surfaces 25 of the worm wheel 20 and the tooth surfaces of the worm gear 19 are in the above-described boundary lubrication state, so that the steering torque of the electric power steering system 1 greatly increases and therefore the steering feeling deteriorates.

$$\text{Film thickness ratio} = \frac{(\text{Oil film thickness})}{(\text{Combined surface roughness of the tooth surfaces of the worm gear and the worm wheel})} \qquad (1)$$

In the expression (1), (Combined surface roughness of the tooth surfaces of the worm gear and the worm wheel) can be determined by the following expression (2). In the expression (2), Ra is the surface roughness Ra ($\mu$m) of the tooth surfaces 25 of the worm wheel 20, and Ra' is the surface roughness ($\mu$m) of the tooth surfaces of the worm gear 19.

$$\text{Combined surface roughness of the tooth surfaces of the worm gear and the worm wheel} = \sqrt{(\text{Ra})^2 + (\text{Ra}')^2} \qquad (2)$$

From the expressions (1) and (2), it is apparent that when the surface roughness of the tooth surfaces of the worm gear 19 made of metal or the like is fixed, the surface roughness of the tooth surfaces 25 of the worm wheel 20 made of a resin composition that contains reinforcing fiber is a major factor that determines the film thickness ratio of the oil film formed between the tooth surfaces of the worm wheel 20 and the tooth surfaces of the worm gear 19, that is, determines whether a continuous oil film can be formed between the tooth surfaces of the worm wheel 20 and the tooth surfaces of the worm gear 19.

According to the invention, the surface roughness Ra of the tooth surfaces 25 is within the range of 0.1 $\mu$m to 0.5 $\mu$m, that is, the surface roughness Ra is greater than or equal to 0.1 $\mu$m and less than or equal to 0.5 $\mu$m, and therefore, it is possible to efficiently improve the oil film-forming performance of grease on the tooth surfaces 25 of the teeth 21 of the worm wheel 20. That is, according to the invention, the film thickness ratio determined by the expression (1) can be made greater than or equal to 0.2, and therefore, a continuous film can be formed between the tooth surfaces 25 of the worm wheel 20 and tooth surfaces of the worm gear 19. Thus, the lubrication between the tooth surfaces 25 of the worm wheel 20 and the tooth surfaces of the worm gear 19 is in a range from the mixed lubrication to the fluid lubrication, and therefore the friction therebetween can be reduced. Hence, the steering torque of the electric power steering system 1 can be reduced and the steering feeling can be improved.

Considering further enhancement of this advantageous effect, it is preferable that the surface roughness Ra of the tooth surfaces 25 be less than or equal to 0.3 $\mu$m within the aforementioned range. When the surface roughness Ra is within the range of 0.3 $\mu$m or less, it is possible to further improve the oil film-forming performance on the tooth surfaces 25 of the worm wheel 20, and therefore, it is possible to reduce the coefficient of sliding friction between the tooth surfaces 25 and the tooth surfaces of the worm gear 19, for example, to a value that is substantially equal to or less than the friction coefficient between tooth surfaces made of a resin that does not contain reinforcing fiber and tooth surfaces of a worm gear. Therefore, the steering torque of the electric power steering system 1 can be further reduced, and therefore the steering feeling can be further improved.

Furthermore, if the surface roughness Ra of the tooth surfaces 25 is made as small as possible within the aforementioned range to achieve a film thickness ratio of 0.9 or greater, the lubrication between the tooth surfaces of the worm gear 19 and the tooth surfaces 25 of the worm wheel 20 is the fluid lubrication alone, so that the friction coefficient is constant regardless of the surface roughness Ra of the tooth surfaces 25.

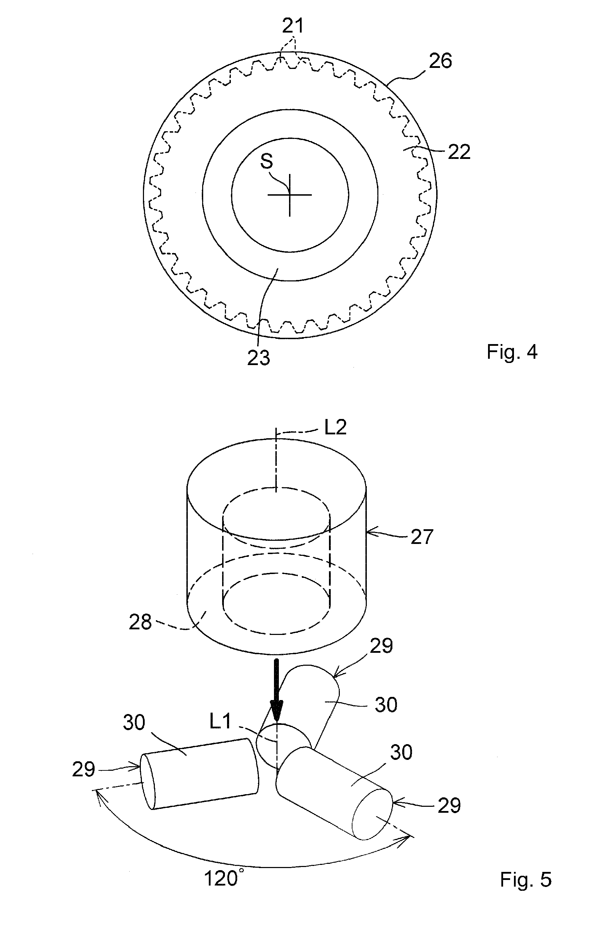

FIG. 4 is a plan view showing an intermediate state of the worm wheel 20 during production thereof. Referring to FIGS. 2 to 4, when the worm wheel 20 is produced, first, the annular resin member 22 whose outer peripheral surface 26 is a columnar surface is formed integrally with the outer periphery of the core metal 23 by, for example, insert molding.

The resin member 22 integrated with the core metal 23 is formed by pouring the heated molten resin composition into a mold and then cooling the resin composition. Then, a gear cutting process is performed on the outer periphery of the resin member 22 as shown by an interrupted line in FIG. 4 to form the teeth 21. Usually, in this state, reinforcing fiber is exposed on the tooth surfaces 25 as mentioned above and the surface roughness Ra of the tooth surfaces 25 is greater than 0.5 $\mu$m.

Therefore, subsequently, the worm wheel 20 provided with the teeth 21 is subjected to a running-in machining process in which the teeth 21 are meshed with the teeth of the worm gear 19 that is actually to be paired with the worm wheel 20 or meshed with the teeth of a master worm gear provided for the running-in machining process, and then the worm wheel 20 is rotated for a certain time at constant torque, speed and/or temperature (usually, at higher torque, higher speed and/or higher temperature than in the condition in which the speed reducer is actually used). In this manner, the surface roughness Ra of the tooth surfaces 25 of the teeth 21 can be adjusted to 0.1 $\mu$m or greater and 0.5 $\mu$m or less.

As for the grease, it is possible to use a general-purpose grease for resin gears, which is used for lubrication between the worm wheel 20 provided with the teeth 21 made of a resin composition that contains reinforcing fiber and the worm gear 19 made of metal, in an environment in which the vehicle is driven. Concretely, there can be cited, for example, various types of greases that contain a synthetic hydrocarbon oil, such as poly-$\alpha$-olefin (PAO), as a base oil, and aliphatic diurea, a metal complex (a Ba complex, a Li complex) or the like as a thickener agent, and that can provide good lubricating performance in an environment in which the vehicle is driven, in particular, in a temperature environment in which an electric power steering system is used.

(FIRST TEST EXAMPLE) A friction coefficient between tooth surfaces in a model of tooth surfaces of teeth of a worm gear and a worm wheel was determined by using a Suzuki abrasion tester. That is, test pieces 27, each of which has a bottomed cylindrical shape as shown in FIG. 5, were produced by using a resin composition in which PA66 had been compounded with 15 mass% of glass fiber.

In each test piece 27, an annular distal end surface 28 at an opening end side of the cylinder served as a model of the tooth surfaces of the teeth of the worm wheel. The test pieces 27 were prepared so that the surface roughness of the distal end surface 28 varied stepwise from 0.05 $\mu$m to 1 $\mu$m as shown in Table 1. On a flat table, three rollers 29 were equiangularly fixed at angular intervals of 120° about a center axis L1 so that the rollers 29 did not rotate about their own axes.

Each of the rollers 29 used was made of steel, and had a diameter $\phi$ of 20 mm. The surface roughness Ra of the columnar surface 30 of each roller 29 was 0.0945 $\mu$m. The columnar surface 30 was used as a model of the tooth surfaces of the teeth of the worm gear. Furthermore, the grease used was a grease prepared for an electric power steering system, which contained PAO as a base oil and a Ba complex as a thickener agent. While a center axis L2 of each test piece 27 was aligned with the aforementioned center axis L1, the distal end surface 28 of the test piece 27 was brought into contact with the columnar surfaces 30 of the rollers 29 to which the grease had been applied. The contact portions and their surroundings were also supplied with a necessary amount of the grease. While this state was maintained in an environment of 80°C, the test piece 27 was pressed with a contact pressure force of 30 N in the direction to the rollers 29 as shown by a thick-line arrow in FIG. 5 and the test piece 27 was rotated in one direction about the center axis L2 at a circumferential speed of 0.166 m/sec.

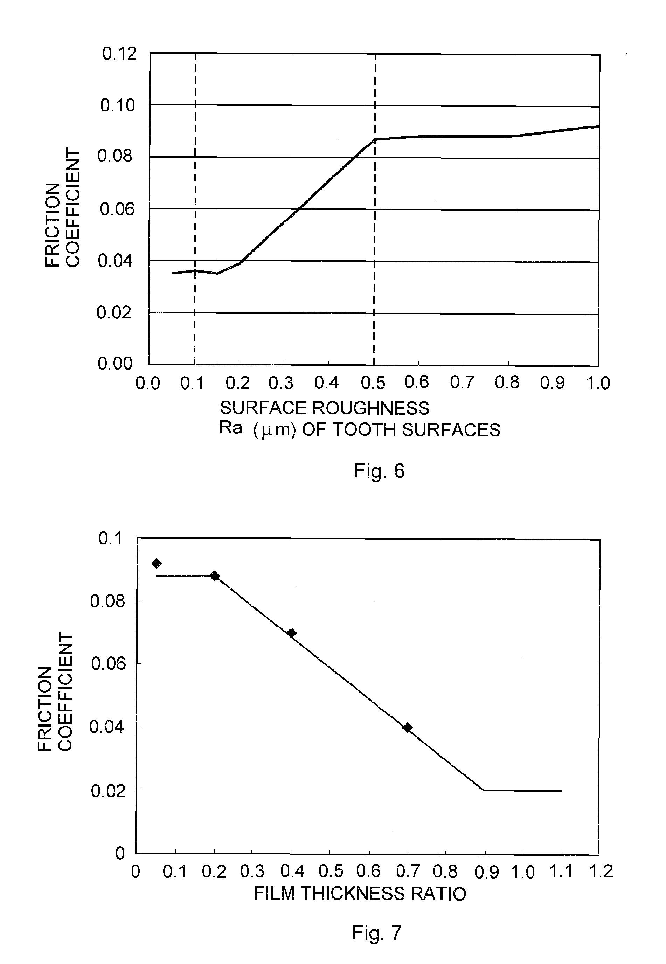

An operation of determining the friction coefficient from results of measurement of the torque acting on the flat table to which the rollers 29 were fixed, in the direction of rotation of the test piece 27 about the center axis L1 as the test piece 27 was rotated was performed for each one of the test pieces 27 that were different from each other in the friction coefficient of the distal end surface 28 as mentioned above. Table 1 and FIG. 6 show a relation between the surface roughness Ra of the distal end surface 28 of each of the test pieces 27 as models of the tooth surfaces of the teeth of the worm wheel, and the friction coefficient between the tooth surfaces of the two gear components, which was determined from the measurement.

Table 1

| Surface roughness Ra (μm) | Friction coefficient |
|---|---|
| 0.05 | 0.035 |
| 0.1 | 0.036 |
| 0.15 | 0.035 |
| 0.2 | 0.039 |
| 0.3 | 0.055 |
| 0.4 | 0.071 |
| 0.5 | 0.087 |
| 0.6 | 0.088 |
| 0.8 | 0.088 |
| 1.0 | 0.092 |

From Table 1 and FIG. 6, it has been found that the coefficient of sliding friction between the tooth surfaces of the teeth of the worm wheel made of a resin composition that contains reinforcing fiber and the tooth surfaces of the teeth of the metal worm gear can be made small by making the surface roughness Ra of the tooth surfaces of the worm wheel equal to 0.5 μm or less. However, it has also been found that a large gear cannot be efficiently produced when the surface roughness Ra is less than 0.1 μm, because a long-time process is needed in order to achieve a surface roughness Ra less than 0.1 μm, and deformation is likely to be caused due to, for example, generation of heat when the process is performed.

Furthermore, it has been found to be preferable that, considering further reduction of the friction coefficient, the surface roughness Ra of the tooth surfaces of the teeth of the worm wheel be less than or equal to 0.3 μm within the foregoing range. It is considered that the friction coefficient was substantially constant irrespective of the surface roughness Ra in the range of the surface roughness Ra less than or equal to 0.15 μm because the lubrication between the tooth surfaces of the two gear components was not the mixed lubrication, and was the fluid lubrication alone in this range, and therefore the surface roughness of the tooth surfaces did not affect the lubrication.

(SECOND TEST EXAMPLE)

The test pieces 27, whose surface roughness Ra of the distal end surface 28 varied stepwise as shown in Table 2, were prepared. Each test piece 27 was combined with the same rollers 29 and the same grease as those used in the first test example, and was subjected to the Suzuki abrasion test under an environment of 80°C. The film thickness ratio in each combination determined by the expression (1) is shown in Table 2.

Table 2

| Surface roughness Ra (μm) | Film thickness ratio | Friction coefficient |
|---|---|---|
| 1.0 | 0.05 | 0.092 |
| 0.5 | 0.2 | 0.088 |
| 0.4 | 0.4 | 0.07 |
| 0.15 | 0.7 | 0.04 |

In the expression (1), (Combined surface roughness of the tooth surfaces of the worm gear and the worm wheel) can be determined by the expression (2) as stated above. In the expression (2), Ra is the surface roughness Ra (μm) of the distal end surface 28 of each test piece 27, and Ra' is the surface roughness of the columnar surface 30 of each roller 29, that is, 0.0945 μm. Table 2 shows a relation among the surface roughness Ra of the distal end surface 28 of each of the test pieces 27 as models of the tooth surfaces of the teeth of the worm wheel, the film thickness ratio determined by the expression (1) and the friction coefficient between the tooth surfaces of the two gear components, which was determined from the measurement.

A relation between the film thickness ratio and the friction coefficient is plotted by a symbol (♦) in FIG. 7. In FIG. 7, a solid line shows a theoretical relation between the film thickness ratio and the friction coefficient. It has been confirmed that results of measurement shown in Table 2 substantially coincide with corresponding theoretical values.

**Claims**

1. An electric power steering system **characterized by** comprising
a speed reducer that includes a small gear and a large gear that mesh with each other, wherein, in the large gear, at least a plurality of teeth that mesh with teeth of the small gear are formed of a resin composition that contains reinforcing fiber, and wherein a surface roughness (Ra) of tooth surfaces of the teeth of the large gear is greater than or equal to 0.1 $\mu$m and less than or equal to 0.5 $\mu$m.

2. The electric power steering system according to claim 1, wherein the surface roughness of the tooth surfaces is less than or equal to 0.3 $\mu$m.

3. The electric power steering system according to claim 1 or 2, wherein the large gear is produced through a step of forming a resin member on which the plurality of teeth are to be formed using the resin composition that contains the reinforcing fiber, a step of forming the teeth by performing a gear-cutting process on the resin member, and a step of adjusting the surface roughness (Ra) of the tooth surfaces by performing a running-in machining process on the teeth.

EP 2 682 327 A2

Fig. 1

8

Fig. 2

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005214339 A